# EUROPÄISCHE PATENTSCHRIFT

(11) **EP 0 974 012 B1**
(45) Veröffentlichungstag und Bekanntmachung des Hinweises auf die Patenterteilung: **19.03.2003**
(21) Anmeldenummer: 98922667.5
(22) Anmeldetag: 08.04.1998
(51) Int. Cl.: F16D 3/74, F16D 3/50

(54) **WELLENKUPPLUNG**
SHAFT COUPLING
ACCOUPLEMENT D'ARBRE

(30) Priorität: 08.04.1997 DE 19714420
(43) Veröffentlichungstag der Anmeldung: 26.01.2000
(73) Patentinhaber: Hackforth GmbH & Co. KG, 44653 Herne (DE)
(72) Erfinder: WALTER, Jürgen, D-45721 Haltern (DE); FALZ, Ulrich, D-44267 Dortmund (DE)
(74) Vertreter: Schneiders, Josef, Dipl.-Ing.
(86) Internationale Anmeldenummer: EP9802046
(87) Internationale Veröffentlichungsnummer: WO98045610

(56) Entgegenhaltungen:
- EP-A- 0 710 544
- DE-A- 2 918 619
- FR-A- 980 352
- GB-A- 576 691
- GB-A- 693 844
- GB-A- 720 404
- GB-A- 1 021 419

## Beschreibung

Die Erfindung betrifft eine Wellenkupplung mit mindestens einem Elastomer-Übertragungselement gemäß Dokument GB-720 404.

Die Drehmomentübertragung bei dem vorgenannten Typ von elastischen Wellenkupplungen erfolgt über elastische Übertragungselemente, die je nach Ausführungsform als ein- oder mehrteilige Drehschub- oder Torsionselemente ausgebildet sind. Die überaus hohen Anforderungen an das elastische Material hinsichtlich eines linearen Dehnungsverhaltens und hoher Langzeitstabilität werden im Stand der Technik seit langer Zeit durch die Verwendung von vulkanisiertem Naturkautschuk, sogenanntem DIEN-Kautschuk, erfüllt.

Durch die dynamische Beanspruchung aufgrund von Lastwechseln während des Betriebs fällt in dem elastischen Gummikörper Verlustwärme an, die abgeführt werden muß, um Beschädigungen durch lokale Überhitzung zu vermeiden. Hierzu ist eine Kühlung der Übertragungselemente erforderlich, die bei den bisher in Antriebssträngen vorliegenden Betriebsbedingungen durch Luftkühlung der vorbeiströmenden Umgebungsluft sicher gewährleistet ist. Durch Maßnahmen wie die Einbringung von zusätzlichen Kühlfenstern ist die Kühlwirkung und damit die Sicherheitsreserve nochmals erhöht worden.

Der Trend bei der Weiterentwicklung der Antriebsstränge, beispielsweise bei Schiffsantrieben, in denen bevorzugt derartige elastische Wellenkupplungen eingesetzt werden, geht jedoch in die Richtung, daß bei immer weiter steigenden Anforderungen an die dynamische Belastbarkeit aufgrund zunehmender Leistungsdichten sowie längerer Wartungsintervalle gleichzeitig für den Betrieb der Kupplung ungünstigere Umgebungsbedingungen auftreten. Immer kompaktere Konstruktionen, bei denen sich wärmeabgebende Aggregate wie Dieselmotoren, Turbolader und dergleichen in unmittelbarer Nähe zur Kupplung befinden, führen nämlich dazu, daß erhöhte Umgebungstemperaturen auftreten, wodurch eine effektive Wärmeabfuhr erschwert wird.

Die erschwerten Einsatzbedingungen erfordern deswegen eine Weiterentwicklung der elastischen Übertragungselemente, da insbesondere bei Elastomeren mit geeigneten mechanischen Eigenschaften mit zunehmender Temperatur die oxidative Alterung an der Materialoberfläche überproportional ansteigt. Die Umgebungsluft bewirkt nämlich nicht nur eine Kühlung, sondern führt durch den in ihr enthaltenen Sauerstoffanteil zu einem atmosphärischen Angriff auf das Elastomermaterial in Form von Ozon- bzw. Sauerstoff-Alterung an den nach außen freiliegenden Oberflächen. Dabei kommt es insbesondere durch den eindiffundierenden Sauerstoff zu einer Versprödung der Oberfläche, wodurch eine Rißbildung unter hoher Beanspruchung begünstigt wird.

Es wird zwar versucht, durch Hinzufügung entsprechender Substanzen in den Elastomerwerkstoff einen chemischen Alterungsschutz zu integrieren. Zum einen darf der Anteil solcher Zuschläge jedoch nicht zu hoch sein, da sonst die mechanischen Eigenschaften beeinträchtigt würden und zum anderen ist es ein grundlegendes Phänomen, daß der Alterungsschutz sich mit der Zeit verbraucht.

Aufgrund dieser Problematik liegt der Erfindung die Aufgabenstellung zugrunde, eine weiterentwickelte Wellenkupplung zu schaffen, deren Übertragungselement auch unter widrigen Umgebungsbedingungen, wie erhöhten Umgebungstemperaturen, langzeitstabil ist und dabei insbesondere gegen oxidative Alterungsprozesse geschützt ist.

Zur Lösung dieser Aufgabe schlägt die Erfindung vor, daß das Übertragungselement an seiner Oberfläche zumindest teilweise mit einer Elastomerfolie überzogen ist.

Die erfindungsgemäße Ausgestaltung ist gleichermaßen auf ein- oder mehrteilige Drehschub- oder Torsionselemente aus DIEN-Kautschuk oder anderen Materialien anwendbar. Dabei sind vorzugsweise zumindest die Bereiche der Oberfläche, die mit der Umgebungsluft unmittelbar in Kontakt stehen, mit dem erfindungsgemäßen Überzug versehen.

Der erfindungsgemäße Überzug zeichnet sich dadurch aus, daß er weitestgehend resistent gegen die vorbeschriebenen Umwelteinflüsse, wie beispielsweise die oxidative Alterung ist. Um diese Anforderungen zu erfüllen, wird zweckmäßigerweise ein wärmebeständiges bzw. warmfestes und dabei gegen oxidative Alterung resistentes Material verwendet.

Der besondere Vorteil der Erfindung ergibt sich unmittelbar daraus, daß der Überzug die gefährdete Oberfläche des Übertragungselementes gegen atmosphärische Einflüsse abschirmt und damit schützt. Die oxidative Alterung wird auf diese Weise praktisch vollständig unterbunden und die Lebensdauer auch unter ungünstigen Umgebungsbedingungen erhöht. Dabei wird durch eine geringe Materialstärke des Überzugs und die Wahl geeigneter, wärmedurchlässiger Materialien die Wärmeabgabefähigkeit nicht kritisch beeinflußt.

Es ist zwar denkbar, das gesamte Übertragungselement mit einem Überzug zu versehen, in der Regel wird es aber ausreichen, es lediglich an seiner äußeren, freiliegenden Umfangsfläche mit einem erfindungsgemäßen Überzug zu versehen. Die äußeren Mantelflächen unterliegen nämlich der relativ größten mechanischen und thermischen Beanspruchung und stehen im Gegensatz zu den vulkanisierten Kontaktflächen zwischen den Flanschen und dem Übertragungselement unmittelbar mit der Umgebungsluft in Kontakt, so daß oxidative Alterung in diesen Bereichen bevorzugt auftritt.

Eine Ausführungsform der Erfindung sieht vor, daß der Überzug als Beschichtung ausgeführt ist. Dabei wird die Beschichtung durch einen flüssig aufgetragenen, aufvulkanisierten oder aufgeklebten Schutzfilm gebildet, der flächig auf dem Übertragungselement anhaftet. Hierbei ist es erforderlich, daß der Schutzfilm hochelastisch ist, um die auftretenden Verformungen problemlos aufzunehmen.

In einer besonders vorteilhaften Weiterbildung der Erfindung ist der Überzug als Umhüllung ausgebildet. Diese zeichnen sich dadurch aus, daß sie - gegebenenfalls unter Vorspannung - zwar schützend, aber nicht flächig fixiert auf der Oberfläche aufliegt. Der besondere Vorteil ergibt sich dabei daraus, daß praktisch eine vollständige Funktionstrennung zwischen der Drehmomentübertragung über das elastische Übertragungselement und dem Schutz des Übertragungselementes gegen äußere Einflüsse vorgenommen wird. Durch die relative Beweglichkeit gegeneinander folgt die Umhüllung nämlich nicht der Verformung des Elastomerkörpers und kann deswegen auch eine geringere Elastizität aufweisen. Dementsprechend kann es aus einem zwar weniger elastischen, jedoch alterungsbeständigen und warmfesten Material bestehen. Diese Anforderungen sind dadurch erfüllt, daß die Umhüllung aus Elastomerfolie besteht, beispielsweise aus einem Synthesekautschuk, wie etwa Ethylen-Acrylat-Kautschuk. Diese Werkstoffe sind auch ausreichend warmfest.

Die Festigkeit der Umhüllung kann dadurch weiter erhöht werden, daß sie mit einer Armierung versehen ist. Dabei handelt es sich beispielsweise um ein Gewebe oder einen Cord, der mit einvulkanisiert ist. Dadurch ergibt sich eine hohe Festigkeit bereits bei sehr dünnen Materialstärken, so daß die auftretenden Fliehkräfte aufgenommen werden, ohne daß sich die Umhüllung merklich verformt.

Um die außenliegenden Umfangsflächen des Übertragungselementes abzudecken, reicht es aus, wenn die Umhüllung als um das Übertragungselement legbarer Ring ausgebildet ist. Dieser kann aus elastischem Material bereits endlos vorgefertigt sein, so daß er über den Anschlußflansch hinweg aufgezogen werden kann, oder als Bandabschnitt, der an einer eingebauten Kupplung durch Kleben oder sonstige Verschlüsse zu einem Ring zusammengefügt werden kann.

Damit die Reibung bei Relativbewegungen des Übertragungselementes und der Umhüllung vermindert wird, ist es vorteilhaft, daß sich zwischen diesen ein reibungsverminderndes Mittel befindet, beispielsweise Schmierstoffe in Form von Pasten oder Gelen.

Der Wärmeübergang vom Übertragungselement auf die Umhüllung kann dadurch verbessert werden, daß zwischen diesen ein Wärmeleitmittel, beispielsweise eine Wärmeleitpaste eingebracht wird.

Bevorzugt empfiehlt sich die Verwendung von Substanzen, die gleichzeitig wärmeleitend und reibungsvermindernd wirken.

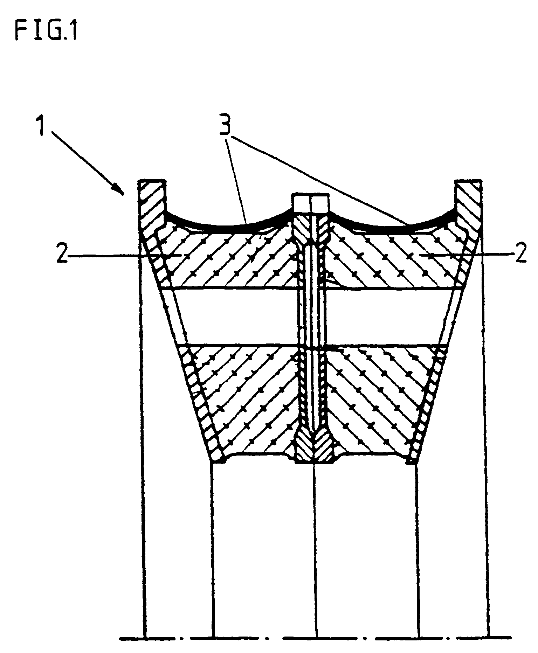

Ein Ausführungsbeispiel einer erfindungsgemäß ausgestalteten Kupplung ist in Figur 1 im Schnitt dargestellt. Darin ist die Kupplung als ganzes mit dem Bezugszeichen 1 versehen. Sie weist zwei axial hintereinander angeordnete, jeweils an Flansche anvulkanisierte, als Torsionselemente ausgebildete elastische Übertragungselemente 2 auf. Um die Außenfläche, d.h. die äußere Mantelfläche der Übertragungselemente 2, die aus DIEN-Kautschuk bestehen, ist jeweils eine ringförmige Umhüllung 3 angeordnet. Diese besteht aus alterungsbeständigem, warmfesten Elastomer, beispielsweise Ethylen-Acrylat-Kautschuk, und deckt die Außenfläche des Übertragungselementes 2 nach außen hin luftundurchlässig ab.

Zwischen den Übertragungselementen 2 und dem Überzug 3 verbleibende Zwischenräume werden gegebenenfalls mit einem wärmeleitfähigen Schmiermittel gefüllt.

Durch die erfindungsgemäße Umhüllung 1 wird die Außenfläche der Übertragungselemente 2 nachhaltig gegen oxidative Alterung - auch bei erhöhten Außentemperaturen - geschützt.

## Patentansprüche

1. Wellenkupplung mit mindestens einem Elastomer-Übertragungselement (2), welches an seiner Oberfläche zumindest teilweise mit einem alterungsbeständigen, luftundurchlässigen Überzug (3) versehen ist, **dadurch gekennzeichnet, daß** der Überzug als Umhüllung (3) aus Elastomerfolie ausgebildet ist.

2. Wellenkupplung nach Anspruch 1, **dadurch gekennzeichnet, daß** das Übertragungselement (2) nur an seiner äußeren, freiliegenden Umfangsfläche mit einer Umhüllung (3) versehen ist.

3. Wellenkupplung nach Anspruch 1, **dadurch gekennzeichnet, daß** die Umhüllung (3) mit einer Armierung versehen ist.

4. Wellenkupplung nach Anspruch 1, **dadurch gekennzeichnet, daß** die Umhüllung (3) als um die freiliegenden Umfangsflächen des Übertragungselementes (2) legbarer Ring ausgebildet ist.

5. Wellenkupplung nach Anspruch 1, **dadurch gekennzeichnet, daß** sich zwischen der Umhüllung (3) und der Oberfläche des Übertragungselementes (2) ein reibungsverminderndes Mittel befindet.

6. Wellenkupplung nach Anspruch 1, **dadurch gekennzeichnet, daß** sich zwischen der Umhüllung (3) und der Oberfläche des Übertragungselementes (2) ein Wärmeleitmittel befindet.

## Claims

1. A shaft coupling comprising at least one elastomer transmission element (2) which at its surface is at least partially provided with an ageing-resistant, air-impermeable covering (3), **characterised in that** the covering is in the form of a sheathing (3) of elastomer foil.

2. A shaft coupling according to claim 1 **characterised in that** it is only at its outer exposed peripheral surface that the transmission element (2) is provided with a sheathing (3).

3. A shaft coupling according to claim 1 **characterised in that** the sheathing (3) is provided with a reinforcement.

4. A shaft coupling according to claim 1 **characterised in that** the sheathing (3) is in the form of a ring which can be applied around the exposed peripheral surfaces of the transmission element (2).

5. A shaft coupling according to claim 1 **characterised in that** there is a friction-reducing means between the sheathing (3) and the surface of the transmission element (2).

6. A shaft coupling according to claim 1 **characterised in that** there is a heat conduction means between the sheathing (3) and the surface of the transmission element (2).

## Revendications

1. Accouplement d'arbre avec au moins un élément de transmission élastomère (2) qui est pourvu à sa surface au moins partiellement d'un revêtement (3) résistant au vieillissement, imperméable à l'air, **caractérisé en ce que** le revêtement est réalisé sous forme d'enveloppe (3) en feuille d'élastomère.

2. Accouplement d'arbre selon la revendication 1, **caractérisé en ce que** l'élément de transmission (2) présente seulement à sa face périphérique extérieure exposée une enveloppe (3).

3. Accouplement d'arbre selon la revendication 1, **caractérisé en ce que** l'enveloppe (3) est pourvue d'une armature.

4. Accouplement d'arbre selon la revendication 1, **caractérisé en ce que** l'enveloppe (3) est réalisée sous forme de bague pouvant être placée autour des faces périphériques exposées de l'élément de transmission (2).

5. Accouplement d'arbre selon la revendication 1, **caractérisé en ce qu'**il se trouve entre l'enveloppe (3) et la surface de l'élément de transmission (2) un moyen réducteur de frottement.

6. Accouplement d'arbre selon la revendication 1, caractérisé en qu'il se trouve entre l'enveloppe (3) et la surface de l'élément de transmission (2) un moyen thermoconducteur.
